Europäisches Patentamt

(19) European Patent Office

Office européen des brevets

(11) Publication number: **0 090 478**
**B1**

(12) **EUROPEAN PATENT SPECIFICATION**

(45) Date of publication of patent specification: **30.09.87**

(21) Application number: **83200453.5**

(22) Date of filing: **30.03.83**

(51) Int. Cl.⁴: **A 22 C 9/00,** A 22 B 5/00, H 05 C 1/04

(54) **Method and apparatus for stimulating carcasses by means of electrical pulses.**

(30) Priority: **31.03.82 NL 8201364**

(43) Date of publication of application:
**05.10.83 Bulletin 83/40**

(45) Publication of the grant of the patent:
**30.09.87 Bulletin 87/40**

(84) Designated Contracting States:
**AT BE CH DE FR GB IT LI LU NL SE**

(56) References cited:
EP-A-0 032 110
GB-A-1 478 258
US-A-2 544 724

(73) Proprietor: **Koltec B.V.**
**Rudonk 4**
**NL-4824 AJ Breda (NL)**

(72) Inventor: **Vriens, Leendert**
**Sparrenlaan 11**
**NL-4851 AZ Ulvenhout (NL)**
Inventor: **van der Horst, Edward Lodewijk**
**Anthonie**
**Deken Koopmanslaan 49**
**NL-4871 AA Etten-Leur (NL)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

In general the invention relates to a method and an apparatus for stimulating carcasses by means of electrical pulses.

A method for the electrical stimulation of carcasses by means of electrical low voltage pulses, for example of approximately 80 V, is known from EP—A—0032110. In order to ensure that the current passing through the carcass is sufficient for effecting adequate electrical stimulation, a positive, in other words, live, electrode of a unit for producing electrical voltage pulses, by manual operation is attached to the carcass thereby that a special clamp is placed at a particular nerve center located in the nose of the carcass, while the chain from which the carcass is suspended is earthed. Because this prior art requires manual attachment of the afore-said live electrode to each carcass at the afore-said particular location, problems of a technical and economical nature arise if relatively large numbers of carcasses are to be processed within a limited period of time. For example, if a number of 1600 to 1800 carcasses are to be processed per day, it is not feasible to bring the conveyor line to a stop each time when the nose clamp electrode has to be attached to the carcass under consideration. In other words this prior art is not appropriate for use in an automated process.

It is a first object of the invention to provide a method for electrical stimulation by which the above deficiency inherent to the aforementioned prior art is overcome.

A method for electrical stimulation of carcasses is according to the invention characterized by applying one or a number of successive high voltage pulses, for example in the range of 3 kV to 10 kV between two spaced surface regions of the skin of the carcass undergoing treatment so as to reduce the electrical contact resistance of the skin or horny layer at said two spaced surface regions, and subsequent thereto applying the electrical low voltage pulses between said two spaced surface regions.

It is observed that GB—A—1,478,258 describes a method and apparatus of conditioning carcasses wherein a freshly slaughtered carcass is subjected to electric stimulation wherein stimulating pulses are used having an amplitude of for example 3600 V. However, this prior art has certain deficiencies which are eliminated by an apparatus of the subject invention.

The method according to the invention is further characterized in that the electrical stimulation of the carcasses is performed subsequent to the bleeding phase and prior to the skinning phase.

Preferably, the method according to the invention is also characterized in that said high voltage pulses are applied periodically at a rate which is a number of times lower than that at which said low voltage pulses are applied.

More in particular the method according to the invention is characterized in that said high voltage pulses are applied at a rate of maximally 60 pulses per minute, wherein each one of said high voltage pulses being present during a time interval of maximally 1.5 milliseconds.

The invention further relates to an apparatus for the electrical stimulation of carcasses and which apparatus comprises:

a carcass conveyor means including a flexible carcass carrier attached thereto, a first electrode rail of electrically conductive material which is electrically insulated relative to a stationary support, such as a wall, and is provided with at least one protruding edge arranged for supporting and guiding an advancing carcass sliding along said rail by a relatively small surface region of the skin; a second electrode rail extending substantially parallel to and above said first electrode rail, said second electrode rail being electrically insulated relative to a stationary support therefor; and an electrical supply unit for supplying high voltage pulses to one of said first and second electrode rails.

An apparatus of the above defined type is known from GB—A—1,478,258.

This prior art system cannot conveniently be adapted in a manner to meet safety requirements, while moreover by its structure it is rather complicated and expensive. By making use of this prior art apparatus a carcass is stimulated by means of relatively strong current pulses having an amplitude of about 2 to 4 amperes, which are produced by high voltage pulses having an amplitude of for example 3600 V. This requires the lowermost electrode (the active electrode) to be lubricated with water, in order to prevent sparking between the carcass and this electrode.

It is a further object of the subject invention to improve the above-mentioned prior art apparatus by providing an apparatus which overcomes the above described deficiencies.

An apparatus according to the invention is characterized in that said second electrode rail is: (a) electrically connected to the positive output terminal of said electrical supply unit, said supply unit being further adapted to generate said high voltage pulses, for example, in the range of 3 kV to 10 kV, and low voltage pulses, for example of approximately 80 V, in sequential combination, and (b) mounted beyond the reach of operating personnel, said first electrode rail is electrically connected to the negative output terminal of said supply unit; and said flexible carcass carrier includes a section of electrically conductive material which via an insulating means is electrically insulated relative to said carcass conveyor means and is adapted to slide along said second electrode rail while in electrical contact therewith.

An apparatus of the subject invention is an implementation of the idea to utilize high voltage pulses of relatively low frequency merely as a means for overcoming the insulating effect of an undressed carcass, in combination with low voltage pulses which actually effect the electrical stimulation.

The prior art as disclosed in the afore-mentioned GB—A—1,478,258 suggests to make use of a stimulating voltage which must be sufficient to overcome the insulating effect of the undressed carcass to overcome the insulation of the wool on a sheep or lamb carcass. However, these voltage pulses are designed to cause a relatively strong stimulation current to occur of between 1 and 4 amperes for the actual stimulation purposes, to provide a contact with the carcass of lower resistance and to prevent sparking between the carcass and the electrodes which could burn the wool on the undressed carcass, to leave a taste of odour on the frozen carcasses. With this prior art the hot electrode is lubricated with water. This means a further complication of structure while adding an aspect of unreliability.

The apparatus according to the invention is further characterized in that said first electrode rail is configured so that the contact surface between said rail and the carcass is so small that a sufficient contact pressure is ensured, while no damage is being done to the skin.

More in particular the apparatus of the invention is characterized in that said first electrode rail is mounted at a level approximately corresponding to the position of the shoulder portion of a carcass suspended from the carcass conveyor means.

Further the apparatus according to the invention is characterized in that said second electrode rail is configured so that a proper electrical contact with the insulated, electrically conductive section of the flexible carcass carrier is ensured.

An alternative embodiment of the apparatus of the invention is characterized in that said electrode rail is composed of a plurality of sections which are insulated relative to each other and which are each connected through a separate electrical line to the positive (live) output terminal of a unit for generating electrical voltage pulses.

A unit for generating electrical voltage pulses which is specifically adapted for use in a stimulating apparatus of the subject invention is characterized by a high voltage generator for producing periodic high voltage pulses at a first rate of occurrence, which generator includes an input circuit having a unidirectionally conductive section through which electrical current produced by the respective high voltage pulses is applied to an output terminal; and a low voltage generator for producing periodic low voltage pulses at a second rate of occurrence, said first rate being substantially lower than at second rate, said low voltage generator includes a unidirectionally conductive section which is also connected to said output terminal, whereby electrical current produced by said low voltage pulses is applied to said output terminal sequential combination with said current produced by the high voltage pulses.

More in particular such unit for generating electrical voltage pulses is characterized in that said high voltage generator is adapted to produce voltage pulses having a peak value of maximally 10 kV, a pulse width of maximally 1.5 milliseconds and a rate of maximally 1 Hz; and said low voltage generator is adapted to produce voltage pulses having a peak value ensuring the desired passage of current through the carcass, and a rate of 14 Hz.

The structural implementation of an apparatus of the subject invention is robust, simple, cost-effective and reliable in operation.

It is a technical advantage of the present invention that the electrical stimulation can be performed following the bleeding phase of a carcass without impairing operational safety.

In illustration of the invention, a number of embodiments will be described hereinafter with reference to the accompanying drawings, in which:

Fig. 1 schematically shows a side elevational view of an apparatus for performing the method of electrical stimulation according to the invention;

Fig. 2 schematically shows a front elevational view of the apparatus shown in Fig. 1;

Fig. 3 shows a block diagram of a unit capable of producing the electrical voltage pulses required for performing the method of electrical stimulation according to the invention; and

Figs. 4.1—4.8 show different voltage waveforms in illustration of the operation of the unit shown in Fig. 3.

The method of electrical stimulation according to the invention is based on the concept that the high voltage, when applied to a carcass in the form of a pulse of short duration, is operative to reduce the relatively high contact resistance presented by the skin or horny layer of the carcass so that the electrical currents required for the electrical stimulation of the carcass can be produced by means of known per se low voltage pulses applied to the carcass through surface regions the contact resistance of which has thus been reduced.

Strictly speaking, a single high voltage pulse having a peak value of maximally 10 kvolts and a width of maximally 1.5 milliseconds is sufficient for preparing a carcass for subsequent low voltage pulses causing the desired electrical stimulation. For reasons of a practical and technical nature, however, it is recommended to periodically apply such high voltage pulses to the carcass undergoing treatment, for example at a rate of one pulse per second, and to apply the low voltage pulses causing the electrical stimulation at a higher rate, for example 14 pulses per second, in the time intervals between successive high voltage pulses, the low voltage pulses having a peak value of 80 volts.

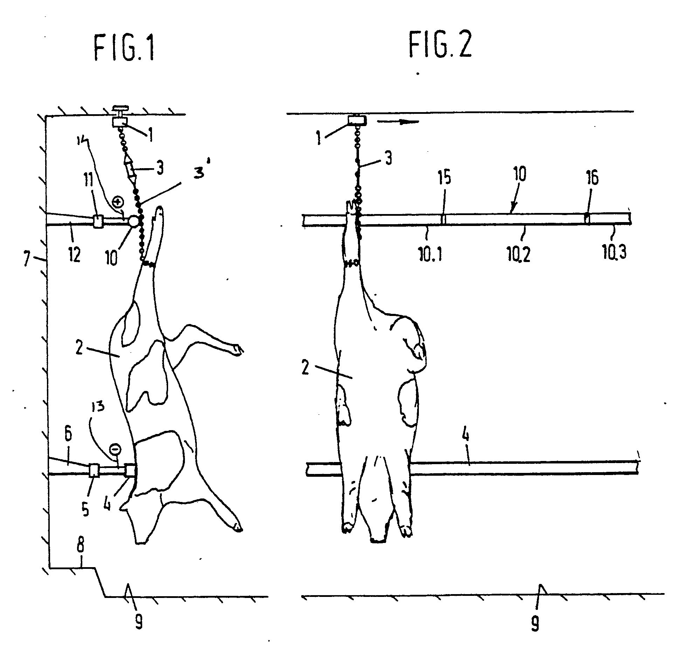

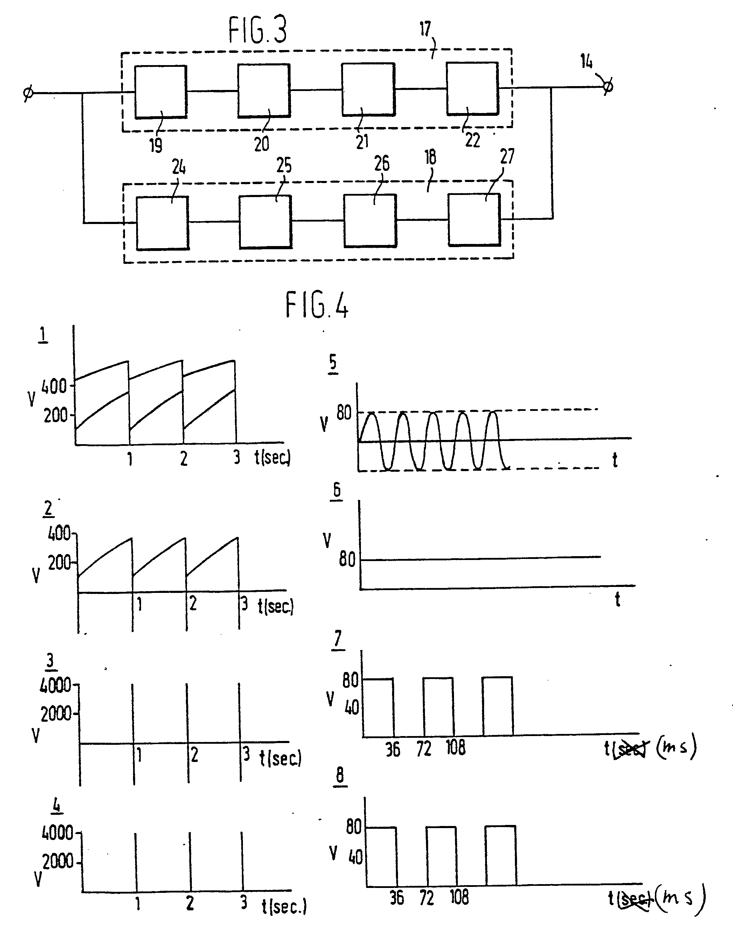

An embodiment of an apparatus for performing a method of electrical stimulation according to the invention is schematically shown in Figs. 1 and 2, while Fig. 3 shows a block diagram of a unit capable of generating the electrical voltage pulses required for the electrical stimulation according to the invention.

In Figs. 1 and 2, reference numeral 1 identifies a conveyor means movable along a conveyor rail of a dressing line. A chain, the so-called leg chain, from which the carcass 2 undergoing treatment is suspended by one of the hind legs, is attached to the conveyor means 1. A portion of this leg chain consists of electrically insulating material, which is schematically indicated by reference numeral 3 in Figs. 1 and 2. For this purpose, use may be made of a piece of electrically insulating material, such as polyester hoisting belt, having a length of e.g. 10 centimeters and attached between a pair of known per se triangle shackles. In this manner, the chain section from which the carcass is suspended is electrically insulated relative to the conveyor means and the surroundings.

The apparatus further includes a first electrode rail 4 arranged to support and guide the carcass suspended from the conveyor means when the carcass is being advanced by this conveyor means. This first electrode rail is secured by means of a connection member 5 of electrically insulating material to a support bracket 6. This support bracket is mounted to a stationary support, such as a wall 7. The first electrode rail is mounted at such a distance from the floor 8 that a carcass suspended from the leg chain has its one shoulder portion urged against this electrode rail and remains in this position while being advanced. Furthermore, this first electrode rail is placed at such a horizontal distance from the wall 7 that the neck of the suspended carcass is located over the so-called blood gutter 9. For example, this first electrode rail may be a metal bar of substantially U-shaped crosssection so that the carcass contacts this first electrode rail by way of two relatively small skin surface regions. The apparatus further includes a second electrode rail 10 mounted substantially parallel to the first electrode rail 4 at such a distance from the floor 8 that this second electrode rail is beyond the reach of operating personnel. Similarly, this second electrode rail is secured by means of a connection member 11 of electrically insulating material to a support bracket 12 mounted to a stationary support such as the wall 7. The first and second electrode rail and the carcass conveyor means are so mounted relative to each other that, by gravity, a carcass suspended from the leg chain has a shoulder portion urged against the first electrode rail 4 and causes the section of the chain that is electrically insulated relative to the surroundings to be urged against the second electrode rail 10. When advanced by the conveyor means, the carcass is thus in electrical sliding contact with the first electrode rail 4 and the second electrode rail 10. The first electrode 4 and the second electrode rail 10 are electrically connected through a first line 13 and a second line 14, respectively, to the negative (neutral) and the positive (live) output terminal, respectively, of the unit (not shown in Figs. 1 and 2) for producing the electrical voltage pulses required for the electrical stimulation according to the invention.

As schematically shown in Fig. 2, it is possible to compose the second electrode rail of a plurality (three in the embodiment shown) of sections 10.1, 10.2 and 10.3 which are electrically insulated relative to each other. These sections are secured to each other by means of connection members 15 and 16 of electrically insulating material. Each of these sections is electrically connected through an individual line to the positive (live) output terminal of a unit for generating the electrical voltage pulses required for the electrical stimulation. If desired, in this embodiment three individual ones of such units may be used having their negative (neutral) output terminals connected in common to the first electrode rail 4.

Fig. 3 shows a block diagram of a unit for generating the voltage pulses required for the electrical stimulation according to the invention. The unit is energized via a supply terminal from a conventional mains, such as a 220 volts, 50 Hz AC mains. Such a unit includes a high voltage generator section 17 and a low voltage generator section 18. The high voltage generator section is adapted to produce (in the loaded state) periodic high voltage pulses, particularly high voltage pulses having a peak value of 3 kvolts in this embodiment, a rate of one pulse per second and a pulse width of approximately 1 millisecond.

The high voltage generator section 17 includes an input stage 19 in which the AC voltage supplied by the mains is rectified and doubled so that a fluctuating DC voltage having a peak value of approximately 500 volts is obtained at the output of this input stage (see Fig. 4.1). The DC voltage thus formed at the output of the input stage is applied to an energy storage stage 20 including a bank of capacitors. The arrangement is so that this bank of capacitors is charged by means of the output voltage of the input stage during a predetermined period of time, for example 1 second, after which an electronic switching means, such as a thyristor circuit, initiates a switching operation causing the electrical charge accumulated in the bank of capacitors to be discharged to a high voltage transformer 21. The voltage obtained at the output of this energy storage stage 20 has a configuration as shown in Fig. 4.2. High voltage pulses having the configuration shown in Fig. 4.3 are induced from the output voltage of the energy storage stage 20 by means of the high voltage transformer 21. An output circuit 22 including a set of blocking diodes dimensioned for high voltages is operative to rectify and transfer these high voltage pulses to the output terminal 14, which is the positive or live output terminal of the unit. The voltage pulses presented at this output terminal have the configuration shown in Fig. 4.4. As will be explained later on, the high voltage transformer 21 also functions as an isolating transformer, so that the output terminal 14 is electrically floating relative to the surroundings.

The low voltage generator section 18 includes an input transformer 24 for transforming the AC mains voltage down to an AC voltage of approximately 70 volts R.M.S. The output voltage of this input transformer is schematically shown in Fig. 4.5 and is applied to a rectifier stage 25 operative to produce a DC voltage of approximately 80 volts at its output (see Fig. 4.6). This DC voltage is applied to a known per se electronic switching circuit 26, in which it is converted to a square-shaped output voltage of the configuration shown in Fig. 4.7. This square-shaped output voltage is applied to the output terminal 14 through an output stage 27 including a set of blocking diodes. Consequently, a composite output voltage comprising the high voltage pulses of the configuration shown in Fig. 4.4 and the output pulses of the configuration shown in Fig. 4.8 appears at the output terminal 14. The input transformer 24 is likewise arranged as an isolating transformer, so that the output terminal 14 is fully floating relative to the surroundings. To this end, the two isolating transformers 21 and 24 are dimensioned to satisfy the standard NEN 40015. The blocking diodes included in the output stage 27 prevent the high voltage pulses produced by the high voltage generator section from having an undesired effect on the low voltage generator section.

In a thus-arranged apparatus it is achieved that both the live and the neutral output terminal, as well as the carcass electrically connected thereto are electrically fully floating relative to the surroundings, which means that the electrical circuit formed via these output terminals and the carcass is electrically uncoupled relative to the surroundings and ground. This is essential in connection with the operational safety of the apparatus.

The current flowing through the carcass as a result of the low voltage pulses is on the order of approximately 200 milliamps. The amount of energy generated by the high voltage pulses is within accepted safety standards.

**Claims**

1. A method for the electrical stimulation of carcasses by means of electrical low voltage pulses for example of approximately 80 V, characterized by applying one or a number of successive high voltage pulses, for example in the range of 3 kV to 10 kV between two spaced surface regions of the skin of the carcass undergoing treatment so as to reduce the electrical contact resistance of the skin or horny layer at said two spaced surface regions, and subsequent thereto applying the electrical low voltage pulses between said two spaced surface regions.

2. A method according to claim 1, characterized in that the electrical stimulation of the carcasses is performed subsequent to the bleeding phase and prior to the skinning phase.

3. A method according to claims 1 or 2, characterized in that said high voltage pulses are applied periodically at a rate which is a number of times lower than that at which said low voltage pulses are applied.

4. A method according to claim 3, characterized in that said high voltage pulses are applied at a rate of maximally 60 pulses per minute, wherein each one of said high voltage pulses being present during a time interval of maximally 1.5 milliseconds.

5. An apparatus for performing the method according to one of the preceding claims, comprising: a carcass conveyor means (1) including a flexible carcass carrier attached thereto, a first electrode rail (4) of electrically conductive material which is electrically insulated relative to a stationary support (5, 6, 7), such as a wall, and is provided with at least one protruding edge arranged for supporting and guiding an advancing carcass sliding along said rail by a relatively small surface region of the skin; a second electrode rail (10) extending substantially parallel to and above said first electrode rail, said second electrode rail being electrically insulated relative to a stationary support (11, 12, 7) therefor; and an electrical supply unit (17, 18) for supplying high voltage pulses to one of the first and second electrode rails, characterized in that said second electrode rail (10) is: (a) electrically connected to the positive output terminal (14) of said electrical supply unit (17, 18), said supply unit being further adapted to generate said high voltage pulses, for example in the range of 3 kV to 10 kV, and low voltage pulses, for example of approximately 80 V, in sequential combination, and (b) mounted beyond the reach of operating personnel, said first electrode rail (4) is electrically connected to the negative output terminal of said supply unit (17, 18); and said flexible carcass carrier includes a section (3') of electrically conductive material which via an insulating means (3) is electrically insulated relative to said carcass conveyor means (1) and is adapted to slide along said second electrode rail (10) while in electrical contact therewith.

6. An apparatus according to claim 5, characterized in that said first electrode rail (4) is configured so that the contact surface between said rail and the carcass is so small that a sufficient contact pressure is ensured, while no damage is being done to the skin.

7. An apparatus according to claims 5 or 6, characterized in that said first electrode rail (4) is mounted at a level approximately corresponding to the position of the shoulder portion of a carcass suspended from the carcass conveyor means.

8. An apparatus according to one of the preceding claims 5—7, characterized in that said second electrode rail (10) is configured so that a proper electrical contact with the insulated, electrically conductive section of the flexible carcass carrier is ensured.

9. An apparatus according to one of the preceding claims 5—8, characterized in that said electrode rail (10) is composed of a plurality of sections (10.1; 10.2; 10.3) which are insulated relative to each other and which are each connected through a separate electrical line to the positive (live) output terminal (14) of a unit (17, 18) for generating electrical voltage pulses.

10. A unit for generating electrical voltage pulses which is adapted for use in an apparatus according to one of the preceding claims 5 through 9, characterized by a high voltage generator (17) for producing periodic high voltage pulses at a first rate of occurrence, which generator includes an input circuit (19) having a unidirectionally conductive section through which electrical current produced by the respective high voltage pulses is applied to an output terminal (14); and a low voltage generator (18) for producing periodic low voltage pulses at a second rate of occurrence, said first rate being substantially lower than said second rate, said low voltage generator includes a unidirectionally conductive section (25) which is also connected to said output terminals (14), whereby electrical current produced by said low voltage pulses is applied to said output terminal in sequential combination with said current produced by the high voltage pulses.

11. A unit for generating electrical voltage pulses according to claim 10, characterized in that said high voltage generator (17) is adapted to produce voltage pulses having a peak value of maximally 10 kV, a pulse width of maximally 1.5 milliseconds and a rate of maximally 1 Hz; and said low voltage generator (18) is adapted to produce voltage pulses having a peak value ensuring the desired passage of current through the carcass, and a rate of 14 Hz.

## Patentansprüche

1. Verfahren zum elektrischen Stimulieren von Schlachttierkörpern durch elektrische Niederspannungs-Impulse, beispielsweise von ungefähr 80 V, dadurch gekennzeichnet,

daß ein oder eine Mehrzahl von aufeinanderfolgenden Hochspannungs-Impulsen, beispielsweise im Bereich zwischen 3 kV und 10 kV, zwischen zwei beabstandeten Oberflächenbereichen der Haut des Schlachttierkörpers zu dessen Behandlung angelegt werden, so daß der elektrische Kontaktwiderstand der Haut- oder Hornschicht an den beiden beabstandeten Oberflächenbereichen vermindert wird, und

daß anschließend die Niederspannungs-Impulse zwischen den beiden beabstandeten Oberflächenbereichen angelegt werden.

2. Verfahren nach Anspruch 1, dadurch gekennzeichnet, daß das elektrische Stimulieren der Schlachttierkörper nach dem Ausbluten und vor dem Häuten durchgeführt wird.

3. Verfahren nach Anspruch 1 oder 2, dadurch gekennzeichnet, daß die Hochspannungs-Impulse periodisch mit einer Rate angelegt werden, die in Vielfaches geringer ist als die Rate der angelegten Niederspannungs-Impulse.

4. Verfahren nach Anspruch 3, dadurch gekennzeichnet, daß die Hochspannungs-Impulse mit einer Rate von maximal 60 Impulsen pro Minute angelegt werden, wobei jeder der Hochspannungs-Impulse eine Impulsbreite von maximal 1,5 Millisekunden aufweist.

5. Einrichtung zum Durchführen des Verfahrens nach einem der vorhergehenden Ansprüche,

mit einer Transportvorrichtung (1) für die Schlachttierkörper mit einer flexiblen Tragevorrichtung,

mit einer ersten Elektrodenschiene (4) aus elektrisch leitendem Material, die bezüglich zu einem feststehenden Träger (5, 6, 7), beispielsweise eine Wand, elektrisch isoliert und mit wenigstens einer hervorstehenden Kante versehen ist, die einen zu transportierenden Schlachttierkörper abstützt und führt, indem dieser längs der Schiene auf einem relativ geringen Oberflächenbereich der Haut gleitet,

mit einer zweiten Elektrodenschiene (10), die sich im wesentlichen parallel und oberhalb zu der ersten Elektrodenschiene erstreckt, wobei die zweite Elektrodenschiene bezüglich zu einem feststehenden Träger (11, 12, 7) elektrisch isoliert ist, sowie mit einem elektrischen Versorgungsgerät (17, 18), das Hochspannungs-Impulse entweder der erste oder der zweiten Elektrodenschiene liefert, dadurch gekennzeichnet,

daß die zweite Elektrodenschiene (10)

(a) elektrisch mit dem positiven Ausgang (14) des elektrischen Versorgungsgerätes (17, 18) verbunden ist, wobei das Versorgungsgerät weiterhin die Hochspannungs-Impulse, beispielsweise im Bereich zwischen 3 kV und 10 kV, sowie Niederspannungs-Impulse, beispielsweise von ungefähr 80 V, aufeinanderfolgend erzeugt, und

(b) außerhalb der Reichweite des Bedienungspersonals angeordnet ist,

daß die erste Elektrodenschiene (4) elektrisch mit dem negativen Ausgang des Versorgungsgerätes (17, 18) verbunden ist und

daß die flexible Tragevorrichtung für die Schlachttierkörper einen Bereich (3') auf elektrisch leitendem Material aufweist, der mittels einer Isolierung (3) bezüglich zur Transportvorrichtung (1) für die Schlachttierkörper elektrisch isoliert und derart vorgesehen ist, daß der Schlachttierkörper entlang der zweiten Elektrodenschiene (10) gleiten kann, während er im elektrischen Kontakt mit dieser steht.

6. Einrichtung nach Anspruch 5, dadurch gekennzeichnet, daß die erste Elektrodenschiene (4) derart ausgebildet ist, daß die Kontaktfläche zwischen der Schiene und dem Schlachttierkörper so gering ist, daß ein ausreichender Kontaktdruck gewährleistet ist, ohne daß die Haut verletzt wird.

7. Einrichtung nach Anspruch 5, oder 6, dadurch gekennzeichnet, daß die erste Elektrodenschiene (4) in einer Höhe angeordnet ist, die ungefähr der Position der Schulterbereiches eines Schlachttierkörpers entspricht, der an der Transportvorrichtung aufgehängt ist.

9. Einrichtung nach einem der Ansprüche 5 bis 7, dadurch gekennzeichnet, daß die zweite Elektrodenschiene (10) derart ausgebildet ist, daß ein ausreichender elektrischer Kontakt mit dem isolierten, elektrisch leitenden Bereich der flexiblen Tragevorrichtung gewährleistet ist.

9. Einrichtung nach einem der Ansprüche 5 bis 8, dadurch gekennzeichnet, daß der Elektrodenschiene (10) aus einer Mehrzahl von Bereichen (10.1; 10.2; 10.3;) zusammengesetzt ist, die voneinander isoliert sind und die jeweils mittels einer separaten elektrischen Leitung mit dem positiven Ausgang (14) des Gerätes (17, 18) zur Erzeugung der elektrischen Spannungsimpulse verbunden sind.

10. Gerät zum Erzeugen elektrischer Spannungsimpulse für eine Einrichtung nach einem der Ansprüche 5 bis 9, gekennzeichnet durch

eine Hochspannungsquelle (17) zum Erzeugen periodischer Hochspannungs-Impulse mit einer erste Rate, wobei die Quelle eine Eingangskreis (19) mit einem unipolaren Leitungsbereich aufweist, durch den der durch die entsprechenden Hochspannungs-Impulse erzeugte elektrische Strom einem Ausgang (14) zugeführt wird,

sowie durch eine Niederspannungsquelle (18) zum Erzeugen periodischer Niederspannungs-Impulse mit einer zweiten Rate, wobei die erste Rate wesentlich geringer ist als diese zweite Rate und wobei die Niederspannungsquelle einen unipolaren Leitungsbereich (25) aufweist, der ebenfalls mit dem Ausgang (14) verbunden ist, wobei der durch die Niederspannungs-Impulse erzeugte elektrische Strom dem Ausgang in einer sequentiellen Kombination mit dem durch die Hochspannungs-Impulse erzeugten Strom zugeführt wird.

11. Gerät nach Anspruch 10, dadurch gekennzeichnet, daß die Hochspannungsquelle (17) Spannungsimpulse erzeugt, die einen Maximalwert von 10 kV, eine Impulsbreite von maximal 1,5 Millisekunden und eine Rate von maximal 1 Hz aufweisen, und daß die Niederspannungsquelle (18) Spannungsimpulse erzeugt, die einen Maximalwert aufweisen, der den erwunschten Durchgang des Stromes durch den Schlachttierkörper gewährleistet, und die eine Rate von 14 Hz aufweist.

## Revendications

1. Procédé pour la stimulation électrique de carcasses au moyen d'impulsions électriques à basse tension, par exemple d'environ 80 V, caractérisé par l'application d'une ou d'un certain nombre d'impulsions successives à haute tension, par exemple entre 3 kV et 10 KV entre deux régions espacées de surface de la peau de la carcasse subissant le traitement afin de réduire la résistance de contact électrique de la peau ou de la couche cornée auxdites deux régions espacées de surface, et l'application subséquente des impulsions électriques à basse tension entre lesdites deux régions espacées de surface.

2. Procédé selon la revendication 1, caractérisé en ce que la stimulation électrique des carcasses est accomplie subséquemment à la phase de saignée et avant la phase d'enlèvement de la peau.

3. Procédé selon la revendication 1 ou 2, caractérisé en ce que lesdites impulsions à haute tension sont appliquées périodiquement à une fréquence qui est plus faible, d'un certain nombre de fois, que celle à laquelle sont appliquées lesdites impulsions à basse tension.

4. Procédé selon la revendication 3, caractérisé en ce que lesdites impulsions à haute tension sont appliquées à raison, au maximum, de 60 impulsions par minute, chacune desdites impulsions à haute tension étant présente pendant un intervalle de temps, au maximum, de 1,5 millisecondes.

5. Appareillage pour accomplir le procédé selon l'une quelconque des revendications précédentes, comprenant: un moyen convoyeur de carcasses (1) contenant un porteur flexible de carcasses qui lui est attaché, un premier rail d'électrode (4) en un matériau électriquement conducteur qui est électriquement isolé relativement à un support stationnaire (5, 6, 7), tel qu'une paroi et est pourvu d'au moins un bord en saillie agencé pour supporter et guider une carcasse qui avance, qui glisse le long du rail par un relativement petite région de surface de la peau; un second rail d'électrode (10) s'étendant sensiblement parallèlement à et au-dessus dudit premier rail d'électrode, ledit second rail d'électrode étant électriquement isolé relativement à un support stationnaire (11, 12, 7); et une unité d'alimentation électrique (17, 18) pour fournir des impulsions à haute tension à l'un desdits premier et second rails d'électrode, caractérisée en ce que ledit second rail d'électrode (10) est: (1) électriquement connecté à la borne de sortie positive (14) de ladite unité d'alimentation électrique (17, 18), ladite unité d'alimentation étant de plus adaptée à produire lesdites impulsions à haute tension, par exemple entre 3 kV et 10 kV et des impulsions basse tension, par exemple d'environ 80 V, en combinaison séquentielle et (b) monté hors de portée du personnel, ledit premier rail d'électrode (4) est électriquement connecté à la borne de sortie négative de ladite unité d'alimentation (17, 18); et ledit porteur flexible de carcasses contient une section (3') en un matériau électriquement conducteur qui, via a moyen isolant (3), est électriquement isolé relativement audit moyen convoyeur de carcasses (1) et est adapté à glisser le long dudit second rail d'électrode (10) en étant en contact électrique avec lui.

6. Appareillage selon la revendication 5, caractérisé en ce que ledit premier rail d'électrode (4) est configuré de manière que la surface de contact entre ledit rail et la carcasse soit si petite qu'une pression suffisante de contact soit assurée, alors que le peau n'est pas endommagée.

7. Appareillage selon les revendications 5 ou 6, caractérisé en ce que ledit premier rail d'électrode (4) est monté à un niveau correspondant à peu près à la position de la portion d'épaule d'une carcasse suspendue au moyen convoyeur de carcasses.

8. Appareillage selon l'une quelconque des revendications 5 à 7, caractérisé en ce que ledit second rail d'électrode (10) est configuré de manière qu'un bon contact électrique avec la section isolée électriquement conductrice du porteur flexible de carcasses soit assuré.

9. Appareillage selon l'une quelconque des revendications précédentes 5—8, caractérisé en ce que ledit rail d'électrode (10) se compose d'un certain nombre de sections (10.1; 10.2; 10.3) qui sont isolées les unes relativement aux autres et dont chacune est connectée, par une ligne électrique séparée, à la borne de sortie positive (vive) (14) d'une unité (17, 18) pour produire des impulsions de tension électrique.

10. Unité pour produire des impulsions de tension électrique qui est adaptée à une utilisation dans un appareillage selon l'une quelconque des revendications 5 à 9 qui précèdent, caractérisée par un générateur de haute tension (17) pour produire des impulsions périodiques à haute tension à une première fréquence, lequel générateur comprend un circuit d'entrée (19) ayant une section unidirectionnellement conductrice par laquelle le courant électrique produit par les impulsions haute tension respectives est appliqué à une borne de sortie (14); et un générateur basse tension (18) pour produire des impulsions périodiques à basse tension à une seconde fréquence, ladite première fréquence étant sensiblement plus faible que ladite seconde fréquence, ledit générateur basse tension comprend une section unidirectionnellement conductrice (25) qui est également connectée à ladite borne de sortie (14), ainsi le courant électrique produit par lesdites impulsions basse tension est appliqué à ladite borne de sortie en combinaison séquentielle avec ledit courant produit par lesdites impulsions haute tension.

11. Unité pour produire des impulsions de tension électrique selon la revendication 10, caractérisée en ce que ledit générateur haute tension (17) est adapté à produire des impulsions de tension ayant une valeur de crête au maximum de 10 kV, une largeur d'impulsion au maximum de 1,5 millisecondes et une fréquence au maximum de 1 Hz; et ledit générateur basse tension (18) est adapté à produire des impulsions de tension ayant une valeur de crête assurant le passage souhaité du courant à travers la carcasse, et à une fréquence de 14 Hz.

# FIG.1

# FIG.2

# FIG.3

# FIG.4